# EUROPEAN PATENT APPLICATION

(11) **EP 4 712 148 A1**
(43) Date of publication of application: **18.03.2026**
(21) Application number: 24904146.8
(22) Date of filing: 03.12.2024
(51) Int. Cl.: H01M 4/04

(54) **METHOD FOR MANUFACTURING ELECTRODE AND ELECTRODE MANUFACTURED THEREBY**

(30) Priority: 11.12.2023 KR 20230179051
(71) Applicant: LG Energy Solution, Ltd., Seoul 07335 (KR)
(72) Inventor: MYUNG, Eui Hoon, Daejeon 34122 (KR)
(74) Representative: Plasseraud IP
(86) International application number: PCT/KR2024/019622
(87) International publication number: WO 2025/127581

(57) **Abstract**

A method for manufacturing an electrode according to an embodiment of the present invention may include applying a first coating layer comprising an active material to at least one surface of a current collector comprising a metal material, applying a plurality of second coating layer comprising the active material to at least one surface of the first coating layer, and rolling the current collector, the first coating layer, and the second coating layer by a rolling device.

## Description

### TECHNICAL FIELD

### CROSS-REFERENCE TO RELATED APPLICATION

The present application claims the benefit of the priority of Korean Patent Application No. 10-2023-0179051, filed on December 11, 2023, which is hereby incorporated by reference in its entirety.

### TECHNICAL FIELD

The present invention relates to a method for manufacturing an electrode, and an electrode manufactured through the method.

### BACKGROUND ART

Research and development on power generation based on Eco-friendly energy sources are being conducted to solve the problem of environmental pollution due to the use of petroleum resources and to resolve the problem of energy shortage due to the depletion of petroleum resources. Particularly, research on secondary batteries that are capable of being repeatedly charged/discharged and thus have high usability is actively conducted, and research is being conducted on various aspects of secondary batteries, such as materials, structures, processes, and stability.

In general, secondary batteries include nickel-cadmium batteries, nickel-hydrogen batteries, lithium ion batteries, and lithium ion polymer batteries. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the lithium secondary battery, first, electrode active material slurry is applied to a positive electrode collector and a negative electrode collector to manufacture a positive electrode and a negative electrode. Then, the electrodes are stacked on both sides of a separator form an electrode assembly. In addition, the electrode assembly may be accommodated in a battery case, an electrolyte may be injected, and then, sealing is performed.

The secondary battery manufactured as described above may be utilized in a variety of industrial applications, and research is actively being conducted to increase in capacity of the secondary battery, thereby more improving performance of the secondary battery. A representative method for increasing in capacity of the secondary battery is to increase in density of the electrode by rolling the electrode under a high pressure when manufacturing an electrode assembly by rolling the electrode.

However, there is a problem in which an electrolyte impregnation property is reduced in the highly rolled electrode. If the electrolyte impregnation property is low, an electrolyte may not quickly reach electrode active material particles, and thus, lithium ions may not move smoothly to deteriorate performance of the secondary battery. In addition, if the electrolyte impregnation property is low, an impregnation speed is slow, resulting in a problem of deteriorated productivity of the secondary battery, because it takes a long time to manufacture the secondary battery.

Therefore, there is a need for technology for manufacturing a secondary battery with high capacity and excellent electrolyte impregnation properties.

### DISCLOSURE OF THE INVENTION

### TECHNICAL PROBLEM

An object of the present invention for solving the above problem is to provide a method for manufacturing an electrode by applying a plurality of second coating layers on a first coating layer so that regions having different active material densities and electrolyte impregnation properties are formed, and an electrode manufactured thereby.

### TECHNICAL SOLUTION

A method for manufacturing an electrode according to an embodiment of the present invention may include applying a first coating layer comprising an active material to at least one surface of a current collector comprising a metal material, applying a plurality of second coating layer comprising the active material to at least one surface of the first coating layer, and rolling the current collector, the first coating layer, and the second coating layer by a rolling device.

In the applying of the second coating layer, the plurality of second coating layers may be applied to be spaced a predetermined interval from each other.

In the rolling by the rolling device, a first active material layer, in which the first coating layer and the second coating layer are rolled together, and a second active material layer, in which the first coating layer is rolled alone, may be formed.

In the rolling by the rolling device, a density of the active material of the first active material layer may be higher than that of the active material of the second active material layer.

In the rolling by the rolling device, an electrolyte impregnation property of the second active material layer may be higher than that of the first active material layer.

In the rolling by the rolling device, the electrode, the first coating layer, and the second coating layer may be rolled so that an outer surface of the first active material layer and an outer surface of the second active material layer are disposed on the same surface.

In the applying of the second coating layer, the second coating layer may be applied in a width direction of the current collector.

An electrode according to another embodiment of the present invention may include a current collector comprising a metal material, and an active material layer applied to at least one surface of the current collector, wherein the active material layer may include a first active material layer, and a second active material layer disposed alternately with the first active material layer and having an active material density lower than that of the first active material layer.

An electrolyte impregnation property of the second active material layer may be higher than that of the first active material layer.

The first active material layer and the second active material layer may be disposed along a width direction of the current collector.

### ADVANTAGEOUS EFFECTS

According to the preferred embodiments of the present invention, the plurality of second coating layers may be applied to the first coating layer so that the region having the different active material densities and electrolyte impregnation properties are formed, thereby manufacturing the high-capacity electrode and also manufacturing the electrode having the excellent electrolyte impregnation properties.

In addition, the configurations according to preferred embodiments of the present invention may include the effects that are capable of being easily predicted by those skilled in the art.

### BRIEF DESCRIPTION OF THE DRAWINGS

The following drawings attached in this specification illustrate a preferred embodiment of the present disclosure and function to make further understood the technical spirit of the present disclosure along with the detailed description of the present disclosure. The present disclosure should not be construed as being limited to only the drawings.
FIG. 1 is a flowchart illustrating a method for manufacturing an electrode according to an embodiment of the present invention.
FIG. 2 is a perspective view illustrating a configuration in which a second coating layer is applied to an outer surface of a first coating layer depending on the method for manufacturing the electrode according to an embodiment of the present invention.
FIG. 3 is a cross-sectional view illustrating a configuration in which the first coating layer, the second coating layer, and a current collector are rolled depending on the method for manufacturing the electrode according to an embodiment of the present invention.
FIG. 4 is a perspective view of an electrode according to another embodiment of the present invention.
FIG. 5 is a perspective view of an electrode according to further another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

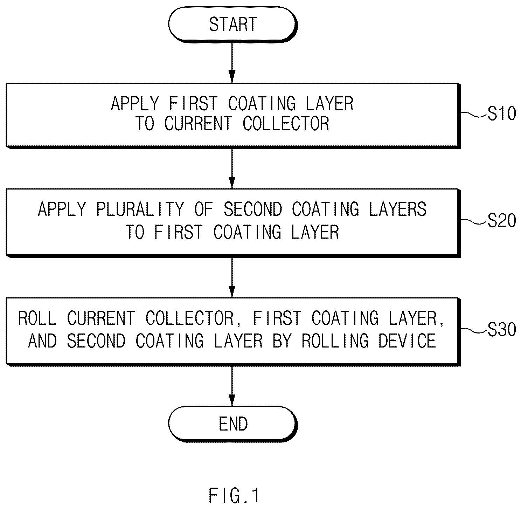

FIG. 1 is a flowchart illustrating a method for manufacturing an electrode according to an embodiment of the present invention.

Referring to FIG. 1, an electrode 1 may be manufactured through a method for manufacturing an electrode according to an embodiment of the present invention. For example, according to the method for manufacturing the electrode, a coating layer including an active material may be applied to at least one surface of a current collector 10. In the state in which the coating layer is applied to at least one surface of the current collector 10, the current collector 10 and the coating layer may be rolled by a rolling device to manufacture an electrode 1, which will be described later, according to another embodiment of the present invention.

Specifically, a first coating layer 11a and a second coating layer 11b may be sequentially applied to at least one surface of the current collector 10, and then, the current collector 10, the first coating layer 11a, and the second coating layer 11b may be rolled by the rolling device.

The current collector 10 may refer to a thin film used to form an electrode assembly by including a structure in which a plate-shaped material is rolled into the form of a roll or cut to be stacked. The current collector 10 may function to transfer electrons from the outside to the active material or release electrons from the active material to the outside so that an electrochemical reaction occurs during charging and discharging processes of the secondary battery.

The current collector 10 may include a metal material. Specifically, the material of the current collector 10 may vary depending on the type of the electrode plates that are divided into negative and positive electrodes. For the negative electrode current collector 10, copper foil that is stable in the electrochemical reaction within an operating range of a carbon electrode 1 and has good electrical conductivity may be mainly used. On the other hand, aluminum foil that is stable in the electrochemical reaction even at a high potential and good electrical conductivity may be used for the positive electrode current collector 10.

The method for manufacturing the current collector 10 may vary depending on the type of the electrode plates. The aluminum foil may be manufactured by thinly spreading aluminum pieces through a rolling process. On the other hand, the copper foil may be manufactured by melting a copper wire through an electrolytic plating process.

Each of the first coating layer 11a and the second coating layer 11b may include active material slurry. The active material slurry may refer to a material that is applied to an outer surface of the current collector 10 to generate electrical energy through the chemical reaction. In addition, the active material slurry may include an active material, a conductive material, and a binder. That is, each of the first coating layer 11a and the second coating layer 11b may include an active material.

The active material may react chemically to generate electrical energy. The active material may include a positive electrode active material or a negative electrode active material.

The positive electrode active material may include: a layered compound of lithium cobalt oxide (LiCoO₂), lithium nickel oxide (LiNiO₂), etc., or a substituted compound with one or more transition metals; lithium manganese oxide such as LiMnO₃, LiMn₂O₃, LiMnO₂, etc.; lithium copper oxide (Li₂CuO₂); vanadium oxide such as LiV₃O₈, LiFe₃O₄, V₂O₅, Cu₂V₂O₇, etc.; Ni site-type lithium nickel oxide represented by Chemical Formula of LiNi₁₋ₓMₓO₂ (where M=Co, Mn, Al, Cu, Fe, Mg, B or Ga, x=0.01 to 0.3); lithium manganese complex oxide represented by Chemical Formula of LiMn₂₋ₓMₓO₂ (where M=Co, Ni, Fe, Cr, Zn or Ta, and x=0.01 to 0.1) or Li₂Mn₃MO₈ (where M=Fe, Co, Ni, Cu or Zn); Lithium manganese complex oxide with a Spinel structure represented by Chemical Formula of LiNiₓMn₂₋ₓO₄; Lithium transition metal phosphorous oxide represented by Chemical Formula of LiₓCoPO₄ (0.5<x<1.3); LiMn₂O₄ in which a portion of Li is substituted with alkaline earth ions; a disulfide compound; Fe₂(MoO₄)₃, and the like, but are not limited thereto.

The negative electrode active material may include: carbonaceous materials such as artificial graphite, natural graphite, graphitized carbon fiber, amorphous carbon, etc.; metallic compounds capable of being alloyed with lithium, such as Si, Al, Sn, Pb, Zn, Bi, In, Mg, Ga, Cd, an Si alloy, an Sn alloy, or an Al alloy; metallic oxides capable of coating and decoating lithium, such as SiOₓ (0 < x < 2), SnO₂, vanadium oxide; a composite comprising a metallic compound and a carbonaceous material, such as lithium titanium oxide, a metal composite oxide including two or more metals, or an Si-C composite or an Sn-C composite, etc., and also, any one of these or a mixture of two or more thereof may be used. In addition, a metal lithium thin film may be used as the negative electrode active material. Additionally, both low-crystallinity carbon and high-crystallinity carbon may be used. Representative examples of low-crystallization carbon may include soft carbon and hard carbon, and representative examples of high-crystallization carbon may include amorphous, plate-like, flaky, spherical or fibrous natural or artificial graphite, Kish graphite, pyrolytic carbon, mesophase pitch-based carbon fiber, mesophase pitches, mesophase pitches, and high-temperature calcined carbon such as petroleum or coal tar pitch-derived cokes.

The conductive material may promote movement of electrons between the positive electrode active material and the negative electrode active material. For example, the conductive material may include a small amount of fine powder carbon to improve the conductivity between active material particles or of the current collector 10 and prevent the binder from acting as an insulator.

Although not particularly limited, exemplary examples of the conductive material may include: carbon-based materials such as carbon black, acetylene black, Ketjen black, channel black, furnace black, lamp black, summer black, and carbon fiber; graphite, such as natural graphite or artificial graphite; metal powder or metal fiber such as copper, nickel, aluminum, or silver; conductive whiskeys such as zinc oxide and potassium titanate; conductive metal oxide such as titanium oxide; or a conductive polymer such as polyphenylene derivatives, and one kind of these alone or a mixture of two or more kinds of them may be used. The conductive material may be contained in an amount of 1 wt% to 30 wt%, specifically 1 wt% to 10 wt%, and more specifically 1 wt% to 5 wt%, based on the total weight of the active material slurry solid content.

The binder may bond the active material to the conductive material. For example, the binder may function to facilitate mixing of the active material and the conductive material with each other. Thus, the binder may function to uniformly apply the active material and the conductive material to the current collector 10. As the charging/discharging of the secondary battery is repeated, the bonding between the active material and the conductive material may become weak, and a volume of the current collector 10 may be changed to deteriorate a lifespan and function of the secondary battery. However, the binder may improve this problem by increasing in bonding strength of the active material and the conductive material.

Although not particularly limited, exemplary examples of the binder may include polyvinylidene fluoride (PVDF), a vinylidene fluoride-hexafluoropropylene copolymer (PVDF_{-co-}HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, an ethylene-propylene-diene polymer (EPDM), sulfonated-EPDM, styrene butadiene rubber (SBR), fluoroelastomer, or various copolymers thereof, and one kind of these alone or a mixture of two or more kinds of them may be used. The binder may be contained in an amount of 1 wt% to 30 wt%, specifically 1 wt% to 10 wt%, and more specifically 1 wt% to 5 wt%, based on the total weight of the solid content in the active material slurry.

According to the method for manufacturing the electrode, the coating layer may be applied several times to the outside surface of the current collector, and the second coating layer 11b may be applied with a specific structure, and thus, a plurality of areas having different active material densities and electrolyte impregnation properties may be formed in the electrode 1. That is to say, in the electrode 1, a region having a relatively high active material density compared to other regions may be formed, and a region having a relatively high electrolyte impregnation property compared to other regions may be formed.

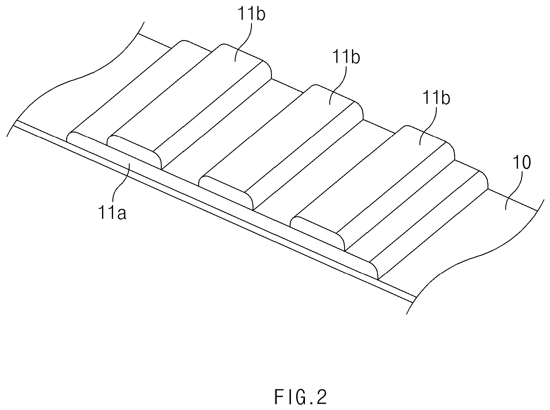

FIG. 2 is a perspective view illustrating a configuration in which the second coating layer 11b is applied to the outer surface of the first coating layer 11a depending on the method for manufacturing the electrode according to an embodiment of the present invention.

Referring to FIG. 2, the method for manufacturing the electrode may include a process (S10) of applying the first coating layer 11a, a process (S20) of applying the second coating layer 11b, and a process (S30) of performing rolling by a rolling device.

In the process (S10) of applying the first coating layer 11a, the first coating layer 11a may be applied to at least one surface of the current collector 10 including a metal material. For example, the first coating layer 11a may be applied to one surface of the current collector 10 or both surfaces of the current collector 10. In addition, the first coating layer 11a may be formed only on a specific portion of the current collector 10, but not on the entire current collector 10.

The first coating layer 11a may be applied to at least one surface of the current collector 10 along a longitudinal direction of the current collector 10. For example, the first coating layer 11a may be applied to the outer surface of the current collector 10 so as to have a longitudinal direction parallel to the longitudinal direction of the current collector 10.

When the electrode 1 is manufactured, a portion of the current collector 10 on which the first coating layer 11a is formed may be formed as a coating portion including the active material slurry. The other portion of the current collector 10 on which the first coating layer 11a is not formed may be formed as a non-coating portion that does not include the active material slurry.

In the process (S20) of applying the second coating layer 11b, a plurality of second coating layer 11b including the active material may be applied to at least one surface of the first coating layer 11a. For example, the second coating layer 11b may be applied to one surface of the first coating layer 11a, and the other surface of the first coating layer 11a may be applied to the current collector 10. In other words, the first coating layer 11a may be applied to a top surface of the current collector 10, and the second coating layer 11b may be applied to a top surface of the first coating layer 11a.

In the process (S20) of applying the second coating layer 11b, a plurality of second coating layers 11b may be applied to be spaced apart from each other. For example, the second coating layer 11b may be applied along a width direction of the current collector 10, and the plurality of second coating layers 11b may be formed to be spaced a predetermined interval from each other. That is, the longitudinal direction of the second coating layer 11b may be parallel to the width direction of the current collector 10. In other words, the plurality of second coating layers 11b may be applied in a stripe shape on the outer surface of the first coating layer 11a.

However, the direction in which the second coating layer 11b is applied may not be limited thereto, and the second coating layer 11b may be applied to be perpendicular to the width direction of the current collector 10.

The second coating layer 11b may be formed to be spaced apart from both ends of the first coating layer 11a. For example, a pair of second coating layers 11b disposed at the outermost layer of the plurality of second coating layers 11b may be spaced a predetermined interval from each of both the ends of the first coating layer 11a.

According to the structure of the second coating layer 11b as described above, since the second coating layer 11b may not be formed on each of both the ends of the first coating layer 11a to prevent the active material slurry from being formed at a high level at both the ends of the first coating layer 11a, thereby preventing a problem such as a sliding phenomenon of the active material slurry from occurring.

In the process (S30) of performing the rolling by the rolling device, the current collector 10, the first coating layer 11a, and the second coating layer 11b may be rolled by the rolling device. For example, the rolling device may include a roller press.

Specifically, the current collector 10 on which the first coating layer 11a and the second coating layer 11b are applied may move between a pair of roller presses. The first coating layer 11a, the second coating layer 11b, and the current collector 10 may be rolled by being pressed by the pair of roller presses.

Due to the rolling process of such the rolling device, s density of the electrode 1 manufactured may increase, and adhesive strength and bonding strength of the current collector 10 and the active material slurry may be enhanced. In addition, due to the rolling process, as a crystal structure of the electrode 1 has directionality, electric energy may be generated from the electrode 1 with a greater output. As a result, the performance of the electrode 1 manufactured by the rolling process may be enhanced.

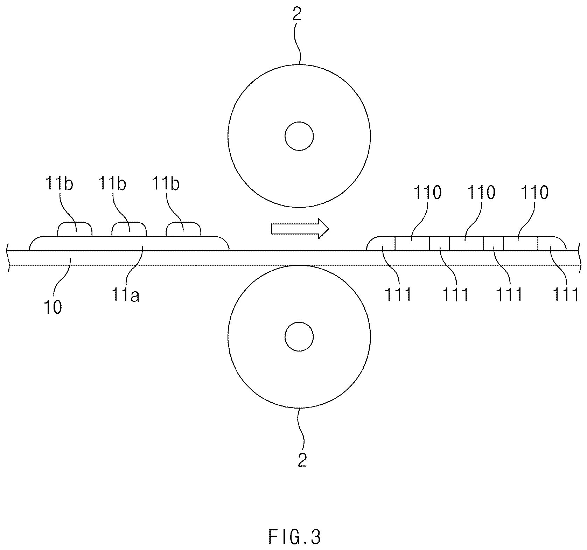

FIG. 3 is a cross-sectional view illustrating a configuration in which the first coating layer 11a, the second coating layer 11b, and the current collector 10 are rolled depending on the method for manufacturing the electrode according to an embodiment of the present invention.

Referring to FIG. 3, in the process (S30) of performing the rolling by the rolling device, a first active material layer 110 in which the first coating layer 11a and the second coating layer 11b are rolled together, and a second active material layer 111 in which the first coating layer 11a is rolled alone may be formed. For example, when the plurality of second coating layers 11b are applied to one surface of the first coating layer 11a at regular intervals from each other, the first coating layer 11a and the second coating layer 11b may be rolled by the rolling device to form an area on which the first coating layer 11a and the second coating layer 11b overlap each other. That is, the first active material layer 110 may be formed only at a specific portion of the first coating layer 11a on which the second coating layer 11b is applied.

The first active material layer 110 and the second active material layer 111 may be formed in plurality, and the plurality of first active material layers 110 and the plurality of second active material layers 111 may be formed along the current collector 10. For example, the first active material layer 110 and the second active material layer 111 may be formed alternately along the longitudinal direction of the current collector 10.

In addition, the first active material layer 110 and the second active material layer 111 may be formed along the width direction of the current collector 10. In other words, the first active material layer 110 and the second active material layer 111 may be formed in a direction parallel to the width direction of the current collector 10.

In the process (S30) of performing the rolling by the rolling device, the electrode 1, the first coating layer 11a, and the second coating layer 11b may be rolled so that the outer surface of the first active material layer 110 and the outer surface of the second active material layer 111 are disposed on the same surface.

In the process (S30) of performing the rolling by the rolling device, the density of the active material of the first active material layer 110 may be higher than that of the active material of the second active material layer 111. In other words, since the first active material layer 110 is a portion at which the first coating layer 11a and the second coating layer 11b are rolled by overlapping each other, the first active material layer 110 may contain a larger amount of active material, unlike the second active material layer 111 on which the first coating layer 11a is formed alone. That is, since the first active material layer 110 contains the larger amount of active material compared to the same volume, the density of the active material of the first active material layer 110 may be higher than that of the active material of the second active material layer 111.

Thus, unlike the case in which only the first coating layer 11a is applied to the current collector 10 and then is rolled, the second coating layer 11b may be secondarily applied to the first coating layer 11a and then be rolled. As a result, according to the method for manufacturing the electrode according to an embodiment of the present invention, the active material region having the higher density may be formed to manufacture the electrode 1 having the higher capacity and higher performance.

On the other hand, in the process (S30) of performing the rolling by the rolling device, the electrolyte impregnation property of the second active material layer 111 may be higher than the electrolyte impregnation property of the first active material layer 110. In other words, since the second active material layer 111 is formed only by the first coating layer 11a that does not overlap the second coating layer 11b, the electrolyte may be further impregnated.

Thus, since the second active material layer 111 has the relatively high electrolyte impregnation property, when manufacturing the secondary battery using the electrode 1, an electrolyte impregnation speed may increase to improve productivity of the secondary battery. In addition, since the second active material layer 111 having the high electrolyte impregnation property enables the electrolyte to quickly reach electrode active material particles and enables lithium ions to move more smoothly, the performance of the secondary battery manufactured using the electrode 1 may be improved.

As a result, the first active material layer 110 and the second active material layer 111 may be formed by the method for manufacturing the electrode according to an embodiment of the present invention to manufacture the high-capacity electrode 1, thereby manufacturing the electrode 1 having the excellent electrolyte impregnation properties.

Hereinafter, an electrode 1 according to another embodiment of the present invention will be described. The electrode 1 according to another embodiment of the present invention may be manufactured through the method for manufacturing the electrode according to an embodiment of the present invention, as described above.

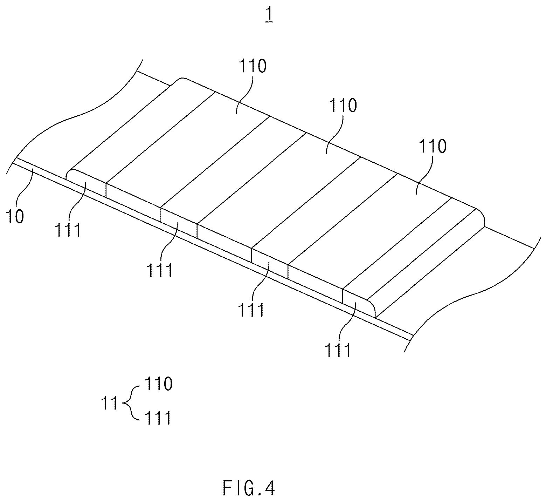

FIG. 4 is a perspective view of an electrode according to another embodiment of the present invention.

Referring to FIG. 4, the electrode 1 may be manufactured by applying an active material layer 11 to a current collector 10. For example, the current collector 10 may include a metal material, and the active material layer 11 may be applied to at least one surface of the current collector 10.

The active material layer 11 may include a first active material layer 110 and a second active material layer 111, which is disposed alternately with the first active material layer 110. For example, the first active material layer 110 and the second active material layer 111 may be formed in plurality, and the plurality of first active material layers 110 and the plurality of second active material layers 111 may be formed along the current collector 10. The first active material layer 110 and the second active material layer 111 may be formed alternately along a longitudinal direction of the current collector 10.

In addition, the first active material layer 110 and the second active material layer 111 may be formed along the width direction of the current collector 10. In other words, the first active material layer 110 and the second active material layer 111 may be formed in a direction parallel to the width direction of the current collector 10.

The first active material layer 110 and the second active material layer 111 may be formed on an outer surface of the current collector so that an outer surface of the first active material layer 110 and an outer surface of the second active material layer 111 are disposed on the same surface.

A density of the active material of the first active material layer 110 may be higher than that of the active material of the second active material layer 111. In addition, an electrolyte impregnation property of the second active material layer 111 may be higher than an electrolyte impregnation property of the first active material layer 110.

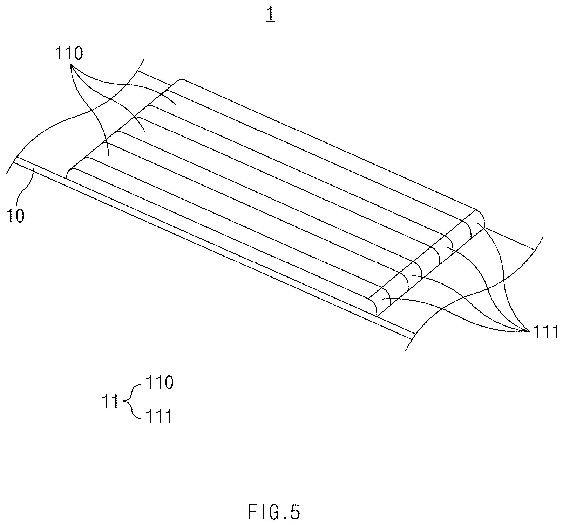

FIG. 5 is a perspective view of an electrode according to further another embodiment of the present invention.

Referring to FIG. 5, an electrode 1 according to further another embodiment of the present invention may include a first active material layer 110 formed along a longitudinal direction of a current collector 10. For example, the first active material layer 110 according to further another embodiment of the present invention may be formed parallel to the longitudinal direction of the current collector 10. Thus, the second active material layer 111 may also be formed parallel to the longitudinal direction of the current collector 10. In other words, the first active material layer 110 and the second active material layer 111 according to further another embodiment of the present invention may be formed perpendicular to a width direction of the current collector.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

### [Description of the Symbols]

1: Electrode
10: Current collector
11: Active material layer
110: First active material layer
111: Second active material layer
11a: First coating layer
11b: Second coating layer

## Claims

1. A method for manufacturing an electrode, the method comprising:
applying a first coating layer comprising an active material to at least one surface of a current collector comprising a metal material;
applying a plurality of second coating layer comprising the active material to at least one surface of the first coating layer; and
rolling the current collector, the first coating layer, and the second coating layer by a rolling device.

2. The method of claim 1, wherein, in the applying of the second coating layer, the plurality of second coating layers are applied to be spaced a predetermined interval from each other.

3. The method of claim 2, wherein, in the rolling by the rolling device, a first active material layer, in which the first coating layer and the second coating layer are rolled together, and a second active material layer, in which the first coating layer is rolled alone, are formed.

4. The method of claim 3, wherein, in the rolling by the rolling device, a density of the active material of the first active material layer is higher than that of the active material of the second active material layer.

5. The method of claim 3, wherein, in the rolling by the rolling device, an electrolyte impregnation property of the second active material layer is higher than that of the first active material layer.

6. The method of claim 3, wherein, in the rolling by the rolling device, the electrode, the first coating layer, and the second coating layer are rolled so that an outer surface of the first active material layer and an outer surface of the second active material layer are disposed on the same surface.

7. The method of claim 2, wherein, in the applying of the second coating layer, the second coating layer is applied in a width direction of the current collector.

8. An electrode comprising:
a current collector comprising a metal material; and
an active material layer applied to at least one surface of the current collector,
wherein the active material layer comprises:
a first active material layer; and
a second active material layer disposed alternately with the first active material layer and having an active material density lower than that of the first active material layer.

9. The electrode of claim 8, wherein an electrolyte impregnation property of the second active material layer is higher than that of the first active material layer.

10. The electrode of claim 8, wherein the first active material layer and the second active material layer are disposed along a width direction of the current collector.
